# EUROPÄISCHE PATENTSCHRIFT

(11) **EP 0 877 183 B1**
(45) Veröffentlichungstag und Bekanntmachung des Hinweises auf die Patenterteilung: **19.05.2004**
(21) Anmeldenummer: 98107498.2
(22) Anmeldetag: 24.04.1998
(51) Int. Cl.: F16J 15/08

(54) **Metallische Zylinderkopfdichtung**
Metallic cylinder head gasket
Joint de culasse métallique

(30) Priorität: 08.05.1997 DE 19719328
(43) Veröffentlichungstag der Anmeldung: 11.11.1998
(73) Patentinhaber: Elring Klinger AG, 72581 Dettingen (DE)
(72) Erfinder: Maschmann, Siegfried, 72547 Bad Urach (DE); Schwenkel, Kurt, 72584 Hülben (DE); Diez, Armin, 73252 Lenningen (DE)
(74) Vertreter: Sparing - Röhl - Henseler Patentanwälte

(56) Entgegenhaltungen:
- EP-A- 0 740 092
- DE-C- 19 531 231

## Beschreibung

Die Erfindung betrifft eine metallische Zylinderkopfdichtung nach dem Oberbegriff des Anspruchs 1.

Aus DE-C 195 13 361 ist eine derartige metallische Zylinderkopfdichtung bekannt, bei der die jeweiligen, um die Brennkammeröffnungen verlaufenden Sicken beidseitig, d.h. durch einen inneren, brennraumzugewandten und durch einen äußeren, brennraumabgewandten Verformungsbegrenzer geschützt sind, so daß die Sicken im eingespannten Zustand der Zylinderkopfdichtung praktisch senkrecht zur Dichtungsebene einfedern. Darüberhinaus ist die beidseitige Anordnung jeweils eines Vorformungsbegrenzers insbesondere dann von Vorteil, wenn die Dichtung bei Büchsenmotoren eingesetzt wird und die Gefahr besteht, daß infolge eines Absakkens der Zylinderlaufbüchse der innere Verformungsbegrenzer seine Wirksamkeit einbüßt. Eine unzulässig hohe Verformung der Sicke wird dann auch weiterhin durch den äußeren Verformungsbegrenzer sicher verhindert. Die äußeren Verformungsbegrenzer, die die Sicken außenseitig schützen, sind hierbei auf ein Trägerblech als Ringe aufgebracht. Das Zentrieren und Befestigen derartiger Ringe ebenso wie das Umfalzen relativ dicker Trägerbleche ist jedoch aufwendig.

Aus der EP-A-0 740 092 ist eine Zylinder kopf dichtung bekannt, die einen Ring aufweist, welcher mit einem Beilageblech so über lappt, daß er einen äußeren Verformungsbegrenzer bildet.

Aufgabe der Erfindung ist es, eine metallische Zylinderkopfdichtung nach dem Oberbegriff des Anspruchs 1 zu schaffen, die eine einfachere Herstellung ermöglicht.

Diese Aufgabe wird entsprechend dem kennzeichnenden Teil des Anspruchs 1 gelöst.

Hierbei wird ein Beilageblech verwendet, das außerhalb des Bereichs der jeweiligen Sicke endet und sich zur Bildung des äußeren Verformungsbegrenzers mit einem den inneren Verformungsbegrenzer tragenden Ring überlappt. Das Beilageblech und die Ringe können aufgrund ihrer Ausnehmungen konzentrisch zu den Brennkammeröffnungen der Brennkraftmaschine ohne weiteres zentriert und aneinander geheftet werden. Außerdem lassen sich die Beilagebleche ebenso wie die Ringe durch einfache Blechverformung bei Verwendung dünner Bleche herstellen, während die erforderliche Gesamtstärke der Zylinderkopfdichtung gegebenenfalls durch Hinzufügen eines Trägerblechs erzielt wird.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.
Fig. 1 zeigt schematisch und ausschnittweise eine Draufsicht auf eine Zylinderkopfdichtung.
Fig. 2 bis 4 zeigen ausschnittweise im Schnitt längs der Linie I-I von Fig. 1 unterschiedliche Ausführungsformen einer Zylinderkopfdichtung.

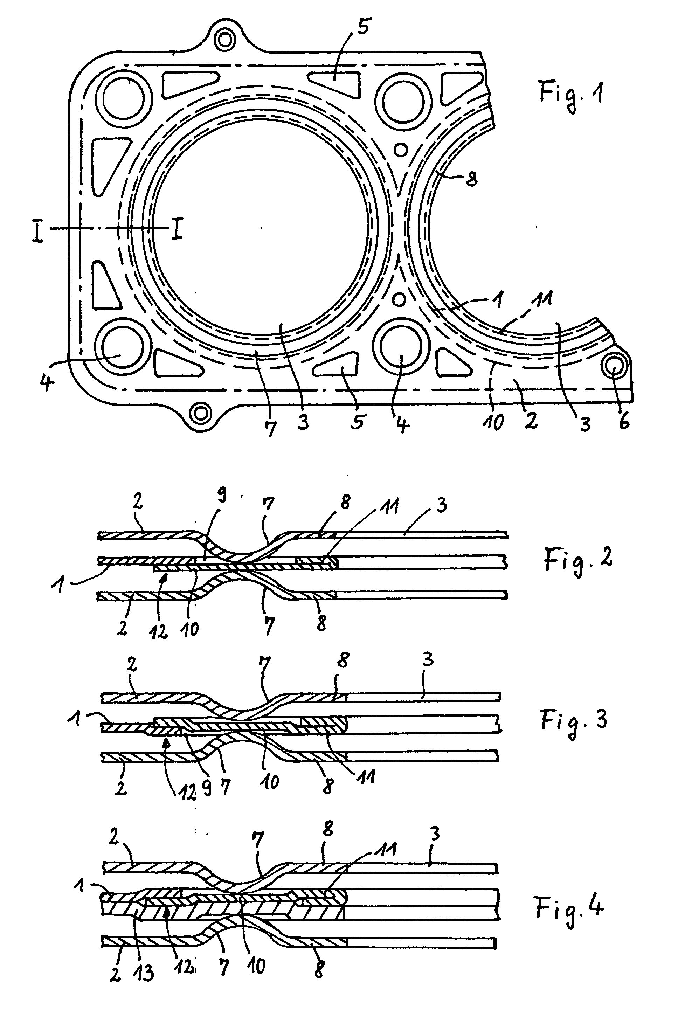

Die in Fig. 1 und 2 dargestellte Zylinderkopfdichtung umfaßt ein dünnes, planes Beilageblech 1, auf dessen beiden Seiten jeweils ein Deckblech 2 angeordnet ist. Die Dichtung, d.h. Beilageblech 1 und Deckbleche 2, weist eine Reihe von Öffnungen 3 entsprechend den Brennräumen einer zugehörigen Brennkaftmaschine sowie Schraubendurchtrittslöcher 4 für Schrauben, die zum Verspannen von Zylinderkopf und -block verwendet werden, als auch Durchtrittsöffnungen 5, 6 für Kühlwasser bzw. Öl auf.

Die gewöhnlich aus Federstahl hergestellten und ansonsten planen Deckbleche 2 sind mit Sicken 7 versehen, die mit Abstand unter Belassung eines geraden Blechabschnitts 8 im Randbereich der Öffnung 3 angeordnet und mit ihrem Scheitel zum Beilageblech 1 gerichtet sind.

Ferner sind üblicherweise um die Durchtrittsöffnungen 6 (und gegebenenfalls 5) und die Schraubendurchtrittslöcher 4 herum Halbsicken in den Deckblechen 2 vorgesehen, während die Durchtrittsöffnungen 5 auch durch elastische Wülste abgedichtet sein können.

Das ansonsten plane Beilageblech 1 endet benachbart von den Sicken 7 außenseitig von diesen, überlappt also den Bereich der Sicken 7 nicht. Bei mehreren Zylindern besitzt somit das Beilageblech 1 mehrere Öffnungen 9, die je nach Zylinderabstand zu einer einzigen brillenartigen Öffnung 9 zusammengefaßt sind.

Außerdem ist um jede Öffnung 3 herum in deren Randbereich jeweils ein Ring 10 aus dünnem Blech vorgesehen, der um die zugehörige Öffnung 3 umlaufend mit einem inneren Verformungsbegrenzer 11 für die benachbarte Sicke 7 versehen ist. Gemäß Fig. 2 ist bei diesem Ausführungsbeispiel der Verformungsbegrenzer 11 dadurch gebildet, daß der Ring 10 benachbart zum Randbereich der jeweiligen Öffnung 3 umgefalzt ist. Der Verformungsbegrenzer 11 kann aber auch durch eine separate Ringauflage gebildet werden.

Der Ring 10 besitzt einen Außendurchmesser derart, daß ein ringförmige Überlappung 12 mit dem Beilageblech 1 gebildet wird, die den konzentrisch zu dem inneren Verformungsbegrenzer 11 verlaufenden, äußeren Verformungsbegrenzer für die Sicke 7 auf der brennraumabgekehrten Seite der Sicke 7 darstellt. Der Ring 10 ist an dem Beilageblech 1 etwa durch punktförmiges Anschweißen im Bereich der Überlappung 12 befestigt. Er kann aber auch beispielsweise aufgeklebt sein. Infolge des Zusammenwirkens beider Verformungsbegrenzer läßt sich erreichen, daß die Einfederung der Sicke 7 praktisch senkrecht zur Dichtungsebene erfolgt bzw. bei Büchsenmotoren ein eventuelles Absacken der Zylinderlaufbüchse ohne schädliche Auswirkung auf die Sicke 7 bleibt.

Die Stärken der Bleche des Beilageblechs 1 und der Ringe 10 braucht hierbei nicht gleich zu sein, sondern kann an die speziellen Gegebenheiten der jeweilige Brennkraftmaschine angepaßt sein.

Bei entsprechend geringem Zylinderabstand sind die Ringe 10 zu einer Brille vereinigt.

Zusätzlich ist es zweckmäßig, wenn die inneren und äußeren Verformungsbegrenzer bei zwei Deckblechen 2 symmetrisch zu diesen bzw. bei einem Deckblech 2 sich aus einer Ebene erhebend angeordnet sind.

Gemäß Fig. 3 sind hierzu bei zwei Deckblechen 2 das Beilageblech 1 und die Ringe 10 entsprechend gekröpft, so daß beide Verformungsbegrenzer praktisch mittig zwischen den Deckblechen 2 angeordnet und somit bezüglich der Sicken 7 beider Deckbleche 2 gleichwirkend sind.

Außerdem kann gemäß Fig. 4 auch ein Trägerblech 13 vorgesehen sein, das dazu dient, die Stärke der Zylinderkopfdichtung auf ihren Sollwert zu bringen, und das entsprechend gekröpft ist, um die mittige Anordnung der beiden Verformungsbegrenzer mittig zwischen den beiden Deckblechen 2 sicherzustellen.

Der innere und/oder äußere Verformungsbegrenzer können bei dieser Ausbildung ohne weiteres breitenprofiliert sein.

## Patentansprüche

1. Metallische Zylinderkopfdichtung für eine Brennkraftmaschine, mit wenigstens einem Deckblech (2) und einem Beilageblech (1), die übereinander angeordnet und mit einer oder mehreren nebeneinander angeordneten Öffnungen (3) entsprechend den Brennkammern der Brennkraftmaschine versehen sind, wobei in dem wenigstens einen Deckblech (2) um jede Öffnung (3) herum mit Abstand zu dieser unter Belassung eines geraden Blechabschnitts (8) im Öffnungsrandbereich eine zum Beilageblech (1) weisende Sicke (7) vorgesehen ist, die durch einen äußeren und einen inneren Verformungsbegrenzer (11, 12) geschützt ist, **dadurch gekennzeichnet, daß** das Beilageblech (1) außerhalb des Bereichs der jeweiligen Sicke (7) endet und zur Bildung des äußeren Verformungsbegrenzers (12) eine Überlappung mit einem den inneren Verformungsbegrenzer (11) tragenden Ring (10) vorgesehen ist.

2. Zylinderkopfdichtung nach Anspruch 1, **dadurch gekennzeichnet, daß** das Beilageblech (1) und der Ring (10) entsprechend der symmetrischen Anordnung der Verformungsbegrenzer (11, 12) zwischen den Deckblechen (2) gekröpft sind.

3. Zylinderkopfdichtung nach Anspruch 1 oder 2, **dadurch gekennzeichnet, daß** der innere Verformungsbegrenzer (11) aus einem umgefalzten Abschnitt des Rings (10) besteht.

4. Zylinderkopfdichtung nach einem der Ansprüche 1 bis 3, **dadurch gekennzeichnet, daß** die Ringe (10) eine Brille bilden.

5. Zylinderkopfdichtung nach einem der Ansprüche 1 bis 4, **dadurch gekennzeichnet, daß** die Ringe (10) an dem Beilageblech (1) punktförmig angeschweißt sind.

6. Zylinderkopfdichtung nach einem der Ansprüche 1 bis 5, **dadurch gekennzeichnet, daß** ein Trägerblech (13) vorgesehen ist.

7. Zylinderkopfdichtung nach einem der Ansprüche 1 bis 6, **dadurch gekennzeichnet, daß** das Beilageblech (1) eine andere Blechstärke als der bzw. die Ringe (10) aufweist.

## Claims

1. Metal cylinder head gasket for an internal combustion engine, comprising at least one cover plate (2) and a supplementary plate (1), which are arranged one on top of the other and are provided with one or more openings (3) arranged one next to the other in correspondence with the combustion chambers of the internal combustion engine, there being provided in the at least one cover plate (2), around each opening (3) and spaced apart from the opening to leave a straight plate portion (8) in the region of the edge of the opening, a bead (7) facing towards the supplementary plate (1), which bead (7) is protected by an outer and an inner deformation limiter (11, 12), **characterised in that** the supplementary plate (1) ends outside the region of the associated bead (7), and for forming the outer deformation limiter (12) there is provided a portion overlapping with a ring (10) that carries the inner deformation limiter (11).

2. Cylinder head gasket according to claim 1, **characterised in that** the supplementary plate (1) and the ring (10) are crimped in accord with the symmetrical arrangement of the deformation limiters (11, 12) between the cover plates (2).

3. Cylinder head gasket according to claim 1 or 2, **characterised in that** the inner deformation limiter (11) consists of a folded-over portion of the ring (10).

4. Cylinder head gasket according to any one of claims 1 to 3, **characterised in that** the rings (10) form a spectacles-like arrangement.

5. Cylinder head gasket according to any one of claims 1 to 4, **characterised in that** the rings (10) are spot-welded to the supplementary plate (1).

6. Cylinder head gasket according to any one of claims 1 to 5, **characterised in that** a carrier plate (13) is provided.

7. Cylinder head gasket according to any one of claims 1 to 6, **characterised in that** the supplementary plate (1) is of different thickness to the ring(s) (10).

## Revendications

1. Joint de culasse métallique pour un moteur à combustion interne, comportant au moins une tôle de recouvrement (2) et une cale de montage (1), qui sont disposées l'une au-dessus de l'autre et sont dotées d'un ou plusieurs orifices (3) ménagés en étant adjacents les uns aux autres, correspondant aux chambres de combustion du moteur à combustion interne, moyennant quoi, dans ladite tôle de recouvrement (2) étant prévue, autour de chaque orifice (3) et à une certaine distance de celui-ci, en laissant une section de tôle droite (8) dans la zone périphérique à l'orifice, une nervure (7) orientée vers la cale de montage (1), laquelle nervure est protégée par l'intermédiaire d'un limiteur de déformation extérieur et intérieur (11, 12), **caractérisé en ce que** la cale de montage (1) se termine en dehors de la zone de la nervure (7) respective et, pour former le limiteur de déformation extérieur (12), il est prévu un recouvrement avec une bague (10) supportant le limiteur de déformation intérieur (11).

2. Joint de culasse selon la revendication 1, **caractérisé en ce que** la cale de montage (1) et la bague (10) sont coudées en fonction de l'agencement symétrique du limiteur de déformation (11, 12) entre les tôles de recouvrement (2).

3. Joint de culasse selon l'une quelconque des revendications 1 ou 2, **caractérisé en ce que** le limiteur de déformation intérieur (11) est constitué d'une section repliée de la bague (10).

4. Joint de culasse selon l'une quelconque des revendications 1 à 3, **caractérisé en ce que** les bagues (10) forment une paire de lunettes.

5. Joint de culasse selon l'une quelconque des revendications 1 à 4, **caractérisé en ce que** les bagues (10), au niveau de la cale de montage (1), ont fait l'objet d'un soudage par point.

6. Joint de culasse selon l'une quelconque des revendications 1 à 5, **caractérisé en ce qu'**il est prévu une tôle de support (13).

7. Joint de culasse selon l'une quelconque des revendications 1 à 6, **caractérisé en ce que** la cale de montage (1) présente une épaisseur de tôle différente de celle de la ou des bagues (10).
